# EUROPÄISCHE PATENTANMELDUNG

(11) **EP 4 782 822 A1**
(43) Veröffentlichungstag der Anmeldung: **29.07.2026**
(21) Anmeldenummer: 25217524.5
(22) Anmeldetag: 21.11.2025
(51) Int. Cl.: G01N 21/90

(54) **INSPEKTIONSVORRICHTUNG UND -VERFAHREN FÜR BEHÄLTER**

(30) Priorität: 22.01.2025 DE 102025102162
(71) Anmelder: Krones AG, 93073 Neutraubling (DE)
(72) Erfinder: Gut, Thorsten, 93073 Neutraubling (DE)
(74) Vertreter: Grünecker Patent- und Rechtsanwälte PartG mbB

(57) **Zusammenfassung**

Inspektionsvorrichtung für Behälter, umfassend eine Inspektionseinheit und ein Gebläse, wobei die Inspektionseinheit eine Erkennungseinheit und eine Schutzvorrichtung für zumindest einen Teil der Erkennungseinheit umfasst, wobei das Gebläse ausgebildet ist, die Schutzvorrichtung mit einem Reinigungsfluid zu beaufschlagen, wobei die Erkennungseinheit ausgebildet ist einen Verschmutzungsgrad der Schutzvorrichtung zu bestimmen, wobei eine Leistung des Gebläses basierend auf dem bestimmten Verschmutzungsgrad und/oder nach einem ersten Zeitintervall von einer ersten Leistungsstufe auf eine zweite Leistungsstufe verändert werden kann.

## Beschreibung

Die vorliegende Erfindung betrifft eine Inspektionsvorrichtung für Behälter umfassend eine Inspektionseinheit und ein Gebläse entsprechend unabhängigem Anspruch 1 und ein Verfahren zur Inspektion von Behältern mit einer Inspektionsvorrichtung entsprechend unabhängigem Anspruch 9.

### Stand der Technik

Inspektionsvorrichtungen zum Inspizieren von Behältern sind aus dem Stand der Technik bekannt.

Inspektionsvorrichtungen können beispielsweise eine Lichtquelle zum Bestrahlen eines zu inspizierenden Behälters mit Licht einer bestimmten Wellenlänge oder eines bestimmten Wellenlängenbereichs sowie eine Kameraeinheit zum Aufnehmen eines Bildes des mit der Lichtquelle bestrahlten Behälters umfassen. Weiterhin ist aus der DE2904126A1 bekannt die Inspektionsvorrichtung mit einem Gebläse auszustatten, um die Lichtquelle, oder eine Schutzeinheit, welche die Lichtquelle oder die Kameraeinheit vor Verschmutzungen schützt, mit einem Reinigungsfluid zu beaufschlagen und die Lichtquelle oder die Schutzeinheit auf diese Weise zu reinigen.

Im Stand der Technik ist es ferner bekannt das Gebläse zum Reinigen der Lichtquelle oder der Schutzeinheit mit konstanter Leistung zu betreiben und somit eine gleichbleibende Reinigung der Lichtquelle oder der Schutzeinheit zu erreichen. Das Betreiben des Gebläses mit konstanter Leistung kann jedoch dazu führen, dass die Leistung des Gebläses höher als eigentlich notwendig gewählt ist, was wiederum mit einem unnötig hohen Energieverbrauch verbunden ist. Es kann jedoch auch der Fall sein, dass die Leistung des Gebläses zu niedrig gewählt ist, um besonders hartnäckige Verschmutzungen zu entfernen, was wiederum mit keiner hinreichenden Reinigung der Lichtquelle oder der Schutzvorrichtung einhergeht.

Aus dem Stand der Technik DE102007052302A1 ist es ferner bekannt die Lichtquelle mit einem, um die Mittelachse rotierenden transparenten Hohlkörper zu umschließen. Ferner ist daraus bekannt, den transparenten Körper mittels Bürsten, Dichtlippen oder Absaugelementen zu reinigen.

### Aufgabe

Ausgehend vom bekannten Stand der Technik liegt die Aufgabe der vorliegenden Erfindung darin, eine Inspektionsvorrichtung und ein Inspektionsverfahren für Behälter anzugeben, welche eine zuverlässige Behälterinspektion mit reduziertem Energieverbrauch ermöglichen.

### Lösung

Diese Aufgabe wird durch die Inspektionsvorrichtung für Behälter umfassend eine Inspektionseinheit und ein Gebläse entsprechend unabhängigem Anspruch 1 und das Verfahren zur Inspektion von Behältern mit einer Inspektionsvorrichtung gemäß unabhängigem Anspruch 9 gelöst. Bevorzugte Ausführungsformen sind in den abhängigen Ansprüchen erfasst.

Die erfindungsgemäße Inspektionsvorrichtung für Behälter umfasst eine Inspektionseinheit und ein Gebläse, wobei die Inspektionseinheit eine Erkennungseinheit und eine Schutzvorrichtung für zumindest einen Teil der Erkennungseinheit umfasst und das Gebläse ausgebildet ist, die Schutzvorrichtung mit einem Reinigungsfluid zu beaufschlagen, wobei die Erkennungseinheit ausgebildet ist einen Verschmutzungsgrad der Schutzvorrichtung zu bestimmen, wobei eine Leistung des Gebläses basierend auf dem bestimmten Verschmutzungsgrad und/oder nach einem ersten Zeitintervall von einer ersten Leistungsstufe auf eine zweite Leistungsstufe verändert werden kann.

Bei dem Behälter kann es sich um eine in der Getränkeindustrie zum Einsatz kommende Flasche handeln. Es kann sich jedoch auch um jeden beliebigen anderen Behälter, welcher zum Aufnehmen eines flüssigen und/oder pastösen Mediums geeignet ist, handeln. Beispielsweise kann es sich bei dem Behälter auch um eine Dose, eine Tube oder eine Spritze, wie sie in der Medizinindustrie, der Lebensmittelindustrie und/oder der Kosmetikindustrie verwendet werden, handeln.

Die Erkennungseinheit kann zum Erkennen eines Behälters ausgestaltet sein. Beispielsweise kann es vorgesehen sein, dass die Erkennungseinheit ausgebildet ist, einen Behälter bildtechnisch zu erfassen. In diesem Fall kann die Erkennungseinheit beispielsweise eine Kamera umfassen, welche ein Bild des Behälters aufnehmen kann. Weiterhin kann die Erkennungseinheit zum messtechnischen Untersuchen eines Behälters hinsichtlich Defekten und/oder Verunreinigungen ausgestaltet sein. Die Erkennungseinheit kann ferner ausgebildet sein, die Schutzvorrichtung bildtechnisch zu erfassen.

Bei dem Gebläse kann es sich um ein aktives oder ein passives Gebläse handeln. Das aktive Gebläse kann eine Ansaugvorrichtung, welche das Reinigungsfluid aktiv ansaugen kann und eine Ausbringvorrichtung umfassen, über welche das angesaugte Reinigungsfluid auf die Schutzvorrichtung ausgebracht werden kann. Bei dem aktiven Gebläse kann es sich beispielsweise um ein Drehkolbengebläse oder ein Seitenkanalgebläse handeln. Das passive Gebläse kann wiederum mit einer Versorgungsvorrichtung in Verbindung stehen, über welche dem passiven Gebläse das Reinigungsfluid über einen Eingang unter Druck zugeführt werden kann. Das unter Druck stehende Reinigungsfluid kann anschließend über einen Ausgang des passiven Gebläses auf die Schutzvorrichtung ausgebracht werden. Bei dem passiven Gebläse kann es sich beispielsweise um ein Druckgasgebläse handeln. Dem Druckgasgebläse kann beispielsweise über eine Druckgasflasche über den Eingang Druckgas zugeführt werden, welches wiederum über den Ausgang auf die Schutzvorrichtung ausgebracht werden kann. Auch wenn das passive Gebläse nicht zwangsläufig eine Ansaugvorrichtung umfassen muss, kann eine solche dennoch vorgesehen sein.

Der Verschmutzungsgrad kann beispielsweise einen aktuellen Verschmutzungszustand der Schutzvorrichtung mit einem Referenzverschmutzungszustand der Schutzvorrichtung, wie beispielsweise einem Neu-Zustand (oder Sauber-Zustand), in Verbindung setzen. Ein Neu-Zustand der Schutzvorrichtung kann ein Zustand sein, unter welchem die Schutzvorrichtung keinerlei Verschmutzungen aufweist.

Das Bestimmen des Verschmutzungsgrades kann beispielsweise umfassen, dass ein von der Erkennungseinheit aufgenommenes Bild von der Erkennungseinheit mittels einer Bildauswertung ausgewertet wird und basierend auf der Bildauswertung der Verschmutzungsgrad der Schutzvorrichtung bestimmt wird. Die Bildauswertung kann zumindest teilweise durch eine künstliche Intelligenz, wie beispielsweise ein neuronales Netz, durchgeführt werden. Alternativ kann die Bildauswertung jedoch auch auf einem deterministischen Algorithmus beruhen. Die Bildauswertung kann beispielweise auch ausgebildet sein zu erkennen, wenn die Verschmutzung von der Schutzvorrichtung entfernt wurde und die Leistung des Gebläses hierauf basierend wieder entsprechend absenken.

Es kann auch vorgesehen sein, dass das Bestimmen des Verschmutzungsgrades das Bestimmen einer Verschmutzungsart umfasst. Die Verschmutzungsart kann beispielsweise mit der oben beschriebenen künstlichen Intelligenz, wie beispielsweise dem neuronalen Netz, bestimmt werden. Die Verschmutzungsart kann beispielsweise eine Verschmutzung mit einer Flüssigkeit, wie beispielsweise wenigstens einem Wassertropfen, und/oder die Verschmutzung mit einem Festkörper, wie beispielsweise zumindest eines Teils eines Etiketts, umfassen. Basierend auf der Verschmutzungsart kann dann der Verschmutzungsgrad bestimmt werden und die Leistung des Gebläses geregelt werden. Beispielsweise kann zur Entfernung wenigstens eines Wassertropfens eine niedrigere Leistung des Gebläses als zum Entfernen eines Teils eines Etiketts notwendig sein.

Der Verschmutzungsgrad kann beispielsweise in Prozent angegeben sein, wobei ein Verschmutzungsgrad von 0% bedeuten kann, dass der aktuelle Verschmutzungszustand der Schutzvorrichtung dem Neu-Zustand der Schutzvorrichtung entspricht und somit keine Verschmutzung der Schutzvorrichtung vorliegt. Ein Verschmutzungsgrad von 100% kann beispielsweise einen maximalen Verschmutzungszustand der Schutzvorrichtung beschreiben. Der maximale Verschmutzungszustand kann beispielsweise einem Zustand der Schutzvorrichtung entsprechen, unter welchem keine hinreichend zuverlässige Inspektion von Behältern mehr durchgeführt werden kann. Es kann jedoch auch vorgesehen sein, dass der Verschmutzungsgrad binär angegeben wird, wobei ein Verschmutzungsgrad von 1 beispielsweise bedeuten kann, die Schutzvorrichtung verschmutzt ist und ein Verschmutzungsgrad von 0 bedeuten kann, dass die Schutzvorrichtung nicht verschmutzt ist (oder andersherum). Auch jede andere geeignete numerische Darstellung des Verschmutzungsgrads ist denkbar.

Das Reinigungsfluid kann beispielsweise ein Gas oder ein Gasgemisch umfassen. Bei dem Gasgemisch kann es sich beispielsweise um Luft handeln.

Unter der Leistungsstufe kann eine von dem Gebläse zum Beaufschlagen der Schutzvorrichtung mit dem Reinigungsfluid aufgenommene Leistung verstanden werden. Unter der Leistungsstufe kann jedoch auch ein Volumenstrom, also ein durch einen bestimmten Querschnitt des Gebläses pro Zeiteinheit bewegtes Volumen an Reinigungsfluid, verstanden werden.

Die zweite Leistungsstufe kann eine höhere Leistung und/oder einen höheren Volumenstrom als die erste Leistungsstufe aufweisen. In der ersten Leistungsstufe kann der Volumenstrom einen von Null verschiedenen Wert aufweisen.

Das erste Zeitintervall kann einer beliebigen Zeitdauer entsprechen. Beispielsweise kann das erste Zeitintervall einen Wert von wenigstens 120 Sekunden annehmen. Beispielsweise kann das erste Zeitintervall einen Wert von 120 Sekunden, 150 Sekunden, 200 Sekunden oder jeden anderen Zeitwert annehmen.

Durch die erfindungsgemäße Inspektionsvorrichtung für Behälter kann das Gebläse entweder basierend auf dem Verschmutzungsgrad oder basierend auf dem ersten Zeitintervall von der ersten Leistungsstufe auf die zweite Leistungsstufe verändert werden. Durch das Verändern der Leistung des Gebläses basierend auf dem Verschmutzungsgrad oder durch das intervallweise Verändern der Leistung des Gebläses, kann der Energieverbrauch der Inspektionsvorrichtung bei gleichzeitig verbesserter Reinigung der Schutzvorrichtung reduziert werden.

In einer Ausführungsform kann es vorgesehen sein, dass die Erkennungseinheit eine Lichtquelle zum Durchleuten eines Behälters und eine Kameraeinheit umfasst, wobei die Schutzvorrichtung zumindest teilweise transparent ausgebildet und zum Schutz der Lichtquelle vorgesehen ist, wobei die Kameraeinheit ausgebildet ist, den Verschmutzungsgrad der Schutzvorrichtung zu bestimmen. Durch die Ausgestaltung der Erkennungseinheit mit einer Lichtquelle und einer Kamera kann der Verschmutzungsgrad besonders präzise bestimmt werden. Durch die zumindest teilweise transparente Ausgestaltung der Schutzvorrichtung kann eine Beleuchtung des Behälters bei gleichzeitigem Schutz der Lichtquelle erreicht werden. Transparent kann bedeuten, dass die Schutzvorrichtung für eine von der Lichtquelle emittierte Strahlung durchlässig ist.

Weiterhin kann es vorgesehen sein, dass die Erkennungseinheit ausgebildet ist, den Verschmutzungsgrad der Schutzvorrichtung zu bestimmen, wenn kein Behälter durch die Inspektionseinheit inspiziert wird. Auf diese Weise kann sichergestellt werden, dass kein Teilbereich der Schutzvorrichtung durch den Behälter bedeckt wird und eine zuverlässige und präzise Bestimmung des Verschmutzungsgrads der Schutzvorrichtung sichergestellt werden.

Ferner kann die Erkennungseinheit ausgebildet sein, den Verschmutzungsgrad der Schutzvorrichtung durch Vergleich von wenigstens zwei an unterschiedlichen Behältern durch die Inspektionseinheit erlangten Inspektionsergebnissen zu bestimmen. Werden Inspektionsergebnisse an wenigstens zwei unterschiedlichen Behältern erlangt und finden sich beispielsweise in beiden Inspektionsergebnissen an identischer Position Anomalien wieder, dann können diese mit hoher Wahrscheinlichkeit einer Verschmutzung der Schutzvorrichtung zugeordnet werden. Auf diese Weise können die Behälterinspektion und die Bestimmung des Verschmutzungsgrades der Schutzvorrichtung zeitlich simultan durchgeführt werden.

In einer Ausführungsform kann es vorgesehen sein, dass die Erkennungseinheit ausgebildet ist, den Verschmutzungsgrad der Schutzeinrichtung kontinuierlich oder intervallweise zu bestimmen. Während durch die intervallweise Bestimmung des Verschmutzungsgrads der Schutzvorrichtung die zur Verfügung stehenden Ressourcen der Erkennungseinheit besonders effizient eingesetzt werden können, so können bei einer kontinuierlichen Bestimmung des Verschmutzungsgrads auch geringfügige Verschmutzungen instantan oder mit sehr geringer zeitlicher Verzögerung erkannt und durch Veränderung der Leistung des Gebläses sofort entfernt werden.

In einer Ausführungsform kann es vorgesehen sein, dass die Leistung des Gebläses basierend auf dem Verschmutzungsgrad von der zweiten Leistungsstufe auf die erste Leistungsstufe oder wobei die Leistung des Gebläses nach einem zweiten Zeitintervall von der zweiten Leistungsstufe auf die erste Leistungsstufe verändert werden kann. Somit kann nach der Entfernung einer Verschmutzung die Leistung des Gebläses beispielsweise wieder reduziert werden und der Energiebedarf der Inspektionsvorrichtung effektiv reduziert werden.

Weiterhin kann es vorgesehen sein, dass die Erkennungseinheit ausgebildet ist, eine Leistung des Gebläses basierend auf einem Vergleich des Verschmutzungsgrads mit wenigstens einem Referenzwert zu verändern. Durch den Vergleich des Verschmutzungsgrads mit dem Referenzwert kann eine für diesen Verschmutzungsgrad spezifische Leistung des Gebläses bestimmt werden und eine nicht hinreichende Reinigung durch Wahl einer zu niedrigen Leistung oder ein unnötig hoher Energieverbrauch durch Wahl einer zu hohen Leistung vermieden werden.

In einer Ausführungsform kann es vorgesehen sein, dass die erste Leistungsstufe unabhängig von dem Verschmutzungsgrad der Schutzvorrichtung gewählt sein kann, wobei die erste Leistungsstufe optional basierend auf einer Restfeuchtigkeit mit welcher die Behälter in die Inspektionsvorrichtung eingeführt werden können, gewählt sein kann. Die erste Leistungsstufe kann beispielsweise derart gewählt sein, dass eine hinreichende Reinigung der Schutzvorrichtung von zeitlich wiederkehrenden Verschmutzungen, wie sie beispielsweise beim Einführen eines Behälters in die Inspektionsvorrichtung auftreten, erreicht werden kann. Weist beispielsweise jeder in die Inspektionseinheit eingebrachte Behälter eine bestimmte Restfeuchtigkeit auf, so wird für jeden in die Inspektionsvorrichtung eingebrachten Behälter, eine ähnliche Menge Flüssigkeit von dem Behälter auf die Inspektionsvorrichtung heruntertropfen. Die erste Leistungsstufe kann in diesem Fall derart gewählt sein, dass diese zumindest ausreichend ist, um die vom Behälter heruntertropfende Flüssigkeit von der Schutzvorrichtung zu entfernen.

Erfindungsgemäß ist weiterhin ein Verfahren zur Inspektion von Behältern mit einer Inspektionsvorrichtung vorgesehen, wobei die Inspektionsvorrichtung eine Inspektionseinheit und ein Gebläse umfasst, wobei die Inspektionseinheit eine Erkennungseinheit und eine Schutzvorrichtung für zumindest einen Teil der Erkennungseinheit umfasst, wobei das Gebläse die Schutzvorrichtung mit einem Reinigungsfluid beaufschlagt und die Erkennungseinheit einen Verschmutzungsgrad der Schutzvorrichtung bestimmt und eine Leistung des Gebläses basierend auf dem bestimmten Verschmutzungsgrad und/oder nach einem ersten Zeitintervall zumindest zeitweise von einer ersten Leistungsstufe auf eine zweite Leistungsstufe verändert wird.

Mit dem erfindungsgemäßen Verfahren zur Inspektion von Behältern wird das Gebläse entweder basierend auf dem Verschmutzungsgrad oder basierend auf dem ersten Zeitintervall von der ersten Leistungsstufe auf die zweite Leistungsstufe verändert. Durch das Verändern der Leistung des Gebläses basierend auf dem Verschmutzungsgrad oder durch das intervallweise Verändern der Leistung des Gebläses wird der Energieverbrauch der Inspektionsvorrichtung bei gleichzeitig verbesserter Reinigung der Schutzvorrichtung reduziert.

**In** einer Ausführungsform des Verfahrens kann die Erkennungseinheit eine Lichtquelle zum Durchleuten eines Behälters und eine Kameraeinheit umfassen, wobei die Schutzvorrichtung zumindest teilweise transparent ausgebildet und zum Schutz der Lichtquelle vorgesehen ist, wobei die Kameraeinheit den Verschmutzungsgrad der Schutzvorrichtung bestimmt. Durch die Ausgestaltung der Erkennungseinheit mit einer Lichtquelle und einer Kamera kann der Verschmutzungsgrad besonders präzise bestimmt werden. Durch die zumindest teilweise transparente Ausgestaltung der Schutzvorrichtung kann eine Beleuchtung des Behälters bei gleichzeitigem Schutz der Lichtquelle erreicht werden.

Weiterhin kann es vorgesehen sein, dass die Erkennungseinheit den Verschmutzungsgrad der Schutzvorrichtung bestimmt, wenn kein Behälter durch die Inspektionseinheit inspiziert wird. Auf diese Weise kann sichergestellt werden, dass kein Teilbereich der Schutzvorrichtung durch den Behälter bedeckt wird und eine zuverlässige und präzise Bestimmung des Verschmutzungsgrads sichergestellt werden.

**In** einer Ausführungsform des Verfahrens kann es vorgesehen sein, dass die Erkennungseinheit den Verschmutzungsgrad der Schutzvorrichtung durch Vergleich von wenigstens zwei an unterschiedlichen Behältern durch die Inspektionseinheit erlangten Inspektionsergebnissen bestimmt. Werden Inspektionsergebnisse an wenigstens zwei unterschiedlichen Behältern erlangt und finden sich beispielsweise in beiden Inspektionsergebnissen an identischer Position Verschmutzungen wieder, dann können diese mit hoher Wahrscheinlichkeit einer Verschmutzung der Schutzvorrichtung zugeordnet werden. Auf diese Weise können die Behälterinspektion und die Bestimmung des Verschmutzungsgrades der Schutzvorrichtung zeitlich simultan durchgeführt werden.

Ferner kann es vorgesehen sein, dass die Erkennungseinheit den Verschmutzungsgrad der Schutzeinrichtung kontinuierlich oder intervallweise bestimmt. Während durch die intervallweise Bestimmung des Verschmutzungsgrads der Schutzvorrichtung die zur Verfügung stehenden Ressourcen der Erkennungseinheit besonders effizient eingesetzt werden können, so können bei einer kontinuierlichen Bestimmung des Verschmutzungsgrads auch geringfügige Verschmutzungen instantan oder mit sehr geringer zeitlicher Verzögerung erkannt und durch Veränderung der Leistung des Gebläses sofort entfernt werden.

**In** einer Ausführungsform des Verfahren wird die Leistung des Gebläses basierend auf dem Verschmutzungsgrad von der zweiten Leistungsstufe auf die erste Leistungsstufe oder die Leistung des Gebläses nach einem zweiten Zeitintervall von der zweiten Leistungsstufe auf die erste Leistungsstufe verändert. Somit kann nach der Entfernung einer Verschmutzung die Leistung des Gebläses beispielsweise wieder reduziert werden und der Energiebedarf der Inspektionsvorrichtung effektiv reduziert werden.

Ferner kann es vorgesehen sein, dass die Erkennungseinheit die Leistung des Gebläses basierend auf einem Vergleich des Verschmutzungsgrads mit wenigstens einem Referenzwert verändert. Durch den Vergleich des Verschmutzungsgrads mit dem Referenzwert kann eine für diesen Verschmutzungsgrad spezifische Leistung des Gebläses bestimmt werden und eine nicht hinreichende Reinigung durch Wahl einer zu niedrigen Leistung oder ein unnötig hoher Energieverbrauch durch Wahl einer zu hohen Leistung vermieden werden.

### Kurze Figurenbeschreibung

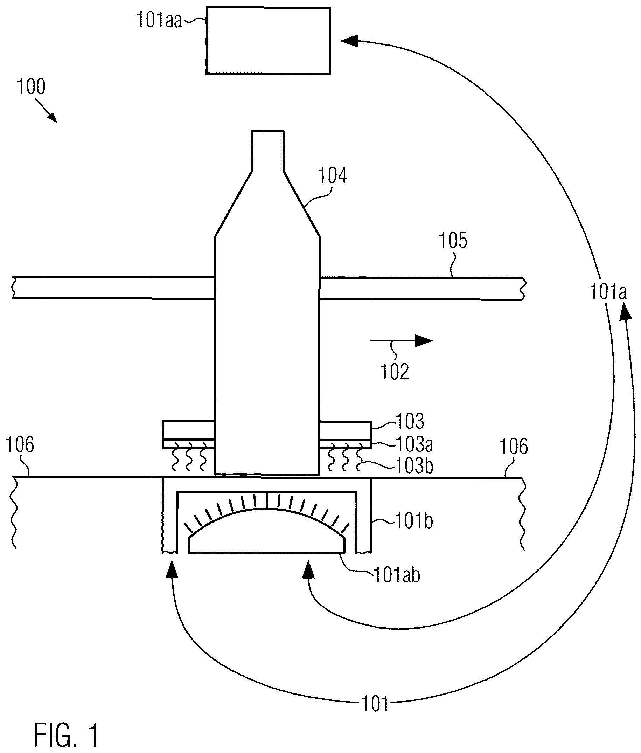

- Fig. 1:: Inspektionsvorrichtung für Behälter gemäß einer Ausführungsform

### Ausführliche Figurenbeschreibung

Fig. 1 zeigt eine Inspektionsvorrichtung 100 für Behälter 104 gemäß einer Ausführungsform.

Erfindungsgemäß umfasst die Inspektionsvorrichtung 100 eine Inspektionseinheit 101 und ein Gebläse 103, wobei die Inspektionseinheit 101 eine Erkennungseinheit 101a und eine Schutzvorrichtung 101b für zumindest einen Teil der Erkennungseinheit 101a umfasst.

Entsprechend der Ausführungsform der Fig. 1 kann die Erkennungseinheit 101a eine Kameraeinheit 101aa und eine Lichtquelle 101ab umfassen.

Die Kameraeinheit 101aa kann beispielsweise einen Sensor zur Detektion von elektromagnetischer Strahlung einer bestimmten Wellenlänge oder eines bestimmten Wellenlängenbereichs, wie beispielsweise Infrarotstrahlung, sichtbare Strahlung oder ultraviolette Strahlung umfassen. Der Sensor kann beispielsweise auf die Lichtquelle 101ab abgestimmt sein, so dass der Sensor zur Detektion von der Lichtquelle 101ab emittierter Strahlung ausgestaltet sein kann. Die Kameraeinheit 101aa kann weiterhin zum Bestimmen eines Verschmutzungsgrads der Schutzvorrichtung 101b ausgestaltet sein.

Die Lichtquelle 101ab kann zur Durchlichtbeleuchtung eines Bodenbereichs des Behälters 104 ausgebildet sein. Die Lichtquelle 101ab kann hierfür ein Leuchtmittel, wie beispielsweise eine LED, eine Glühbirne oder eine Leuchtstoffröhre oder jedes andere Leuchtmittel umfassen. Die Lichtquelle kann auch ausgestaltet sein, den Behälter 104 mit infraroter Strahlung oder ultravioletter Strahlung zu durchleuchten. Ein Licht emittierender Bereich der Lichtquelle 101ab kann eine Fläche aufweisen, welche größer ist als eine von einem Bodenbereich eines zu inspizierenden Behälters 104 eingenommene Fläche.

Die oben beschriebene spezifische Art der Ausgestaltung der Erkennungseinheit 101a ist als beispielshaft zu verstehen. Es kann beispielsweise auch vorgesehen sein, dass die Erkennungseinheit 101a eine Kameraeinheit 101aa aber keine Lichtquelle 101ab umfasst. In diesem Fall kann es beispielsweise vorgesehen sein, dass die Schutzvorrichtung 101b zum Schutz von zumindest einem Teilbereich der Kameraeinheit 101aa ausgestaltet ist.

Auch die in der Fig. 1 dargestellte Anordnung der Lichtquelle 101ab in vertikaler Richtung unterhalb einer Transportebene des Behälters 104 und der Kameraeinheit 101aa in vertikaler Richtung oberhalb der Transportebene des Behälters 104 ist als beispielhaft zu verstehen. Alternativ kann es beispielsweise auch vorgesehen sein, dass die Kameraeinheit 101aa unterhalb und die Lichtquelle 101ab oberhalb der Transportebene angeordnet ist. Bei entsprechender Anordnung von Kameraeinheit 101aa und Lichtquelle 101ab kann eine Bodeninspektion, also ein Inspektion eines Bodenbereichs des Behälters hinsichtlich Verschmutzungen und/oder Defekten durchgeführt werden. Auch eine Inspektion einer inneren Seitenwand des Behälters 104 kann bei entsprechender Anordnung einer spezifisch für diese Art der Inspektion ausgestalteten Lichtquelle 101ab und entsprechender Kameraeinheit 101aa erreicht werden.

Alternativ kann es beispielsweise auch vorgesehen sein, dass die Kameraeinheit 101aa und die Lichtquelle 101ab in horizontaler Richtung seitlich auf gegenüberliegenden Seiten neben einer Transportstrecke des Behälters 104 angeordnet sind. Auf diese Weise kann beispielsweise eine Seitenwandinspektion des Behälters 104 erreicht werden.

Umfasst die Inspektionseinheit 101 eine Kameraeinheit 101aa aber keine Lichtquelle 101ab, so kann es vorgesehen sein, dass die Kameraeinheit 101aa in vertikaler Richtung oberhalb oder unterhalb der Transportebene des Behälters 104 oder in horizontaler Richtung seitlich neben der Transportstrecke des Behälters 104 angeordnet ist. Durch die flexible Art der Anordnung der Kameraeinheit 101aa kann beispielsweise eine Boden-, aber auch eine Seitenwandinspektion des Behälters 104 durchgeführt werden.

Weiterhin ist auch die im Zusammenhang mit der Fig. 1 gezeigte Anordnung der Schutzvorrichtung 101b zum Schutz der Lichtquelle 101ab als beispielhaft zu verstehen. Ist die Kameraeinheit 101aa beispielsweise in vertikaler Richtung unterhalb der Transportebene und die Lichtquelle 101ab oberhalb der Transportebene der Behälter 104 angeordnet, dann kann es beispielsweise auch vorgesehen sein, dass die Schutzvorrichtung 101b zum Schutz der Kameraeinheit 101aa vorgesehen ist.

Auch in dem Fall, bei welchem die Inspektionseinheit 101 eine Kameraeinheit 101aa, aber keine Lichtquelle 101ab umfasst, kann es vorgesehen sein, dass die Schutzvorrichtung 101b zum Schutz der Kameraeinheit 101aa vorgesehen ist.

Zum Transport des Behälters 104 durch die Inspektionsvorrichtung 100 kann die Inspektionsvorrichtung 100 eine Transportvorrichtung 105 umfassen. Die Transportvorrichtung 105 kann zwei Transportbänder umfassen, welche auf gegenüberliegenden Seiten der Transportstrecke entlang welcher der Behälter 104 entlang einer Transportrichtung 102 transportiert werden kann, angeordnet sind. Eine Kontaktfläche der Transportbänder mit welcher die Transportbänder mit dem Behälter in Kontakt stehen, kann eine Vielzahl von Noppen umfassen, welche wiederum beispielsweise einen Kunststoff oder einen Gummi umfassen können. Ein Normalvektor der Kontaktfläche der Transportbänder kann dabei parallel zu einer Transportebene der Behälter 104 sein. Bei Entsprechender Ausrichtung der Transportbänder können die beiden Transportbänder auf jeweils gegenüberliegenden Seitenflächen an die Behälteroberfläche angreifen, so dass der Behälter durch die endlos umlaufenden Transportbänder in Transportrichtung 102 gefördert werden kann. Es kann auch vorgesehen sein, dass jeweils zwei Transportbänder auf jeder Seite der Transportstrecke auf verschiedenen Höhen angeordnet sind, wodurch beispielsweise ein Umkippen des Behälters während dem Transport verhindert werden kann. Bei entsprechender Ausgestaltung der Transportvorrichtung 105 kann erreicht werden, dass die durch die Lichtquelle 101ab emittierte Strahlung, den Behälter 104 entlang dessen Längsachse durchlaufen kann und nicht durch die Transportvorrichtung 105 reflektiert oder absorbiert wird.

Weiterhin können stromab und stromauf der Schutzvorrichtung 101b bezüglich der Transportrichtung 102 Transporteinrichtungen 106 vorgesehen sein, mittels welchen die Behälter 104 zur Schutzvorrichtung 101b beziehungsweise der Transportvorrichtung 105 hin und von der Schutzvorrichtung 101b beziehungsweise der Transportvorrichtung 105 weg transportiert werden können.

Sind die Kameraeinheit 101aa und die Lichtquelle 101ab in horizontaler Richtung auf gegenüberliegenden Seiten der Transportstrecke angeordnet, dann kann es auch vorgesehen sein, dass der Behälter 104 durch ein konventionelles Transportband, auf welchem der Behälter zur Förderung mit dem Behälterboden in Kontakt steht, gefördert wird.

Bei der Schutzvorrichtung 101b kann es sich um eine Vorrichtung handeln, welche die Erkennungseinheit 101a zumindest teilweise umgibt und auf diese Weise zumindest einen Teil der Erkennungseinheit 101a vor einer Verunreinigung, beispielweise durch eine Flüssigkeit, wie beispielsweise einer von einem Behälter 104 heruntertopfenden Flüssigkeit, oder einem Festkörper, wie beispielsweise Staub oder einer Komponente eines Behälters 104, wie beispielsweise einem Behälteretikett, schützen kann. Um diese Funktion erfüllen zu können, kann die Schutzvorrichtung 101b ein Material, wie beispielsweise ein Glas, ein Metall und/oder einen Kunststoff umfassen, welches für die oben genannten Verunreinigungen undurchlässig ist.

Wie in der Fig. 1 gezeigt, kann die Schutzvorrichtung 101b beispielsweise zwischen dem Behälter 104 und der Lichtquelle 101ab angeordnet sein, so dass die Lichtquelle 101ab von einer vom Behälter heruntertropfenden Flüssigkeit, einem Festkörper oder ähnlichem geschützt werden kann. Die in der Fig. 1 dargestellte U-förmige Ausbildung der Schutzvorrichtung 101b ist als beispielhaft zu verstehen. Die Schutzvorrichtung 101b kann beispielsweise auch als Platte ausgestaltet sein, oder auch jede andere Form aufweisen, welche zum Schutz zumindest eines Teils der Erkennungseinheit 101a geeignet ist.

Im Allgemeinen kann es vorgesehen sein, dass die Schutzvorrichtung 101b einen Teil der Erkennungseinheit 101a, welcher beispielsweise eine Strahlung emittiert oder zur Detektion der Strahlung vorgesehen ist, vor einer Verunreinigung schützt, da eine Verunreinigung auf dem entsprechenden Teil der Erkennungseinheit 101a ein durch die Inspektionseinheit 101 erlangtes Inspektionsergebnis negativ beeinflussen kann.

Um eine Inspektion des Behälters 104 auch bei Anordnung der Schutzvorrichtung 101b zwischen Behälter 104 und Erkennungseinheit 101a zu erreichen, kann es vorgesehen sein, dass die Schutzvorrichtung 101b zumindest teilweise transparent ausgebildet ist. Unter transparent kann verstanden werden, dass die Schutzvorrichtung 101b zumindest für die von der Lichtquelle 101ab emittierte und/oder von der Kameraeinheit 101aa detektierte Strahlung durchlässig ist. Emittiert die Lichtquelle 101ab beispielsweise elektromagnetische Strahlung im sichtbaren Wellenlängenbereich, dann kann die Schutzvorrichtung 101b beispielsweise ein transparentes Glas umfassen.

Um die Schutzvorrichtung 101b zu reinigen und von Verunreinigungen zu befreien ist wiederum das Gebläse 103 vorgesehen. Hierfür ist das Gebläse 103 erfindungsgemäß ausgebildet, die Schutzvorrichtung 101ab mit einem Reinigungsfluid 103b zu beaufschlagen.

Bei dem Reinigungsfluid 103b kann es sich beispielsweise um ein Gas oder ein Gasgemisch handeln.

Zum Beaufschlagen der Schutzvorrichtung 101b mit dem Reinigungsfluid 103b kann es beispielsweise vorgesehen sein, dass das Gebläse 103 auf einer Eingangsseite Umgebungsluft ansaugt und die Umgebungsluft auf einer Ausgangsseite über eine Öffnung 103a in Richtung der Schutzvorrichtung 101b wieder ausgibt.

Bei dem Gebläse 103 kann es sich beispielsweise um ein Drehkolbengebläse oder ein Seitenkanalgebläse handeln.

Es kann jedoch auch vorgesehen sein, dass das Gebläse 103 auf der Eingangsseite über eine Verbindungsleitung mit einer Druckgasflasche, wie beispielsweise einer Druckluftflasche verbunden ist und das Druckgas, beziehungsweise die Druckluft, an der Ausgangsseite über die Öffnung 103a des Gebläses 103 auf die Schutzvorrichtung 101b ausgebracht wird. Durch Veränderung eines dem Gebläse pro Zeiteinheit zugeführten Gasvolumens aus der Druckgas- bzw. der Druckluftflasche kann eine Leistung des Gebläses 103 verändert werden. Beispielsweise kann zwischen Gebläse 103 und Druckgasflasche ein steuerbares Ventil geschalten sein, welches die Gaszufuhr an das Gebläse 103 und somit die Leistung des Gebläses 103 regeln kann.

Eine Form und eine Abmessung der Öffnung 103a an der Ausgangsseite des Gebläses 103 kann an eine Abmessung der Schutzvorrichtung 101b angepasst sein.

Beispielsweise kann es vorgesehen sein, dass die Ausgangsseite eine Öffnung 103a umfasst, welche schlitzartig ausgestaltet ist und eine Länge des Schlitzes einer Abmessung der Schutzvorrichtung 101b entspricht. Ist das Gebläse 103 beispielsweise in horizontaler Richtung seitlich neben der Schutzvorrichtung 101b angeordnet, dann kann eine Länge der Öffnung 103a einer Länge der Schutzvorrichtung 101b entlang der Transportrichtung 102 der Behälter 104 entsprechen. Umfasst die Schutzvorrichtung 101b, wie weiter oben beschrieben, einen transparenten Teil, dann kann es auch vorgesehen sein, dass die Länge der Öffnung 103a des Gebläses 103 einer Länge des transparenten Teils der Schutzvorrichtung 101b entlang der Transportrichtung 102 der Behälter 104 entspricht.

Das Gebläse 103 kann beispielsweise in horizontaler Richtung seitlich neben der Schutzvorrichtung 101b angeordnet sein, so dass das Reinigungsfluid durch die Öffnung 103a des Gebläses 103 entlang einer Richtung auf die Schutzvorrichtung 101b ausgebracht werden kann, welche im Wesentlichen senkrecht auf der Transportrichtung 102 der Behälter 104 steht. Im Wesentlichen senkrecht kann dabei so verstanden werden, dass Ausbringrichtung und Transportrichtung einen Winkel zwischen 80° und 100° einschließen.

Weiterhin kann es vorgesehen sein, dass die Ausbringrichtung des Reinigungsfluids mit einer Transportebene in welcher die Behälter über die Schutzvorrichtung geführt werden, einen Winkel kleiner 90° einschließt. Um eine möglichst effiziente Reinigung der Oberfläche der Schutzvorrichtung zu erreichen, kann es vorgesehen sein, dass die Ausbringrichtung und die Transportebene einen Winkel kleiner 30°, einen Winkel kleiner 15° oder einen Winkel kleiner 5° einschließen. Durch Wahl eines möglichst kleinen Winkels, wie beispielsweise eines Winkels kleiner als 5°, kann das durch die Öffnung ausgebrachte Reinigungsfluid über die gesamte zu reinigende Oberfläche der Schutzvorrichtung geführt werden und somit eine besonders gründliche Reinigung der Schutzvorrichtung erreicht werden.

Weiterhin kann es auch vorgesehen sein, dass eine Ausbringrichtung des Reinigungsfluid in der Transportebene liegt. In diesem Fall kann es beispielsweise vorgesehen sein, dass die Öffnung 103a der Ausgangseite des Gebläses 103 in vertikaler Richtung nur geringfügig oberhalb der Schutzvorrichtung 101b angeordnet ist, so dass trotz der parallelen Ausrichtung der Ausbringrichtung und einer zu reinigenden Oberflächenebene der Schutzvorrichtung eine gründliche Reinigung der Oberfläche der Schutzvorrichtung erreicht werden kann. Unter der Anordnung in vertikaler Richtung geringfügig oberhalb der Schutzvorrichtung kann verstanden werden, dass die Öffnung 103a der Ausgangsseite beispielsweise 1cm, 2cm oder 5cm in vertikaler Richtung oberhalb der zu reinigenden Oberfläche liegt.

Die Erkennungseinheit 101a ist erfindungsgemäß wiederum ausgebildet einen Verschmutzungsgrad der Schutzvorrichtung 101b zu bestimmen und eine Leistung des Gebläses 103 basierend auf dem bestimmten Verschmutzungsgrad und/oder nach einem ersten Zeitintervall von einer ersten Leistungsstufe auf eine zweite Leistungsstufe zu verändern.

In der Ausführungsform der Fig. 1 ist die Kameraeinheit 101aa ausgebildet den Verschmutzungsgrad der Schutzvorrichtung 101b zu bestimmen. Um den Verschmutzungsgrad zu bestimmen, kann die Kameraeinheit 101aa beispielsweise ein Bild der Schutzvorrichtung 101b aufnehmen, wenn gerade kein Behälter 104 durch die Inspektionseinheit 101 inspiziert wird. Das Bild der Schutzvorrichtung 101b kann dann mit einem Referenzbild einer Schutzvorrichtung 101b, welche keine Verschmutzung aufweist, verglichen werden. Das Vergleichen kann beispielsweise umfassen, dass die Kameraeinheit 101aa Unterschiede zwischen den beiden Bildern bestimmt und den Verschmutzungsgrad basierend auf den bestimmten Unterschieden ermittelt.

Um den Verschmutzungsgrad zu bestimmen kann die Erkennungseinheit 101a eine Computereinheit umfassen. Die Computereinheit kann wiederum einen Prozessor und eine Speichereinheit, wie beispielsweise einen nichtflüchtigen Speicher umfassen. In dem Speicher können beispielsweise Referenzbilder einer Schutzvorrichtung 101b, welche keine Verschmutzungen aufweist, hinterlegt sein. Wie oben beschrieben, können Abweichungen zwischen dem durch die Kameraeinheit 101aa aufgenommenen Bild und dem Referenzbild bestimmt und hierauf basierend der Verschmutzungsgrad bestimmt werden. Beispielsweise können durch die Computereinheit Pixel in dem durch die Kameraeinheit 101aa aufgenommenen Bild identifiziert werden, welchen eine Verschmutzung zugeordnet werden kann. Diese Pixel können beispielsweise wiederum mit einer Gesamtpixelanzahl des Bildes der Schutzvorrichtung 101b in Verbindung gesetzt werden und hierauf basierend der Verschmutzungsgrad bestimmt werden. Hierfür kann die Computereinheit beispielsweise ausgebildet sein, eine Bildauswertung der durch die Erkennungseinheit erlangten Bilder durchzuführen. Die Bildauswertung kann beispielsweise zumindest teilweise durch eine künstliche Intelligenz, wie beispielsweise ein neuronales Netz, durchgeführt werden. Alternativ kann jedoch auch ein deterministischer Algorithmus zur Bildauswertung verwendet werden.

Es kann jedoch auch vorgesehen sein, dass die Erkennungseinheit 101a ausgebildet ist, den Verschmutzungsgrad durch Vergleich von wenigstens zwei an unterschiedlichen Behältern 104 durch die Inspektionseinheit erlangten Inspektionsergebnissen zu bestimmen. Da Verschmutzungen der Schutzvorrichtung 101b unabhängig vom inspizierten Behältern einen Hintergrund des Inspektionsergebnisses bilden, können beispielsweise Anomalien, welche in beiden Bildern an derselben Position auftreten, mit hoher Wahrscheinlichkeit einer Verschmutzung der Schutzvorrichtung 101b zugeordnet werden. Basierend auf den bestimmten Anomalien kann dann der Verschmutzungsgrad bestimmt werden.

Weiterhin kann das Bestimmen des Verschmutzungsgrades das Bestimmen einer Verschmutzungsart umfassen. Die Verschmutzungsart kann beispielsweise mit der oben beschriebenen künstlichen Intelligenz, wie beispielsweise dem neuronalen Netz, bestimmt werden. Die Verschmutzungsart kann beispielsweise eine Verschmutzung mit einer Flüssigkeit, wie beispielsweise wenigstens einem Wassertropfen, und/oder die Verschmutzung mit einem Festkörper, wie beispielsweise zumindest eines Teils eines Etiketts, umfassen. Basierend auf der Verschmutzungsart kann dann der Verschmutzungsgrad bestimmt werden und die Leistung des Gebläses geregelt werden. Beispielsweise kann zur Entfernung wenigstens eines Wassertropfens eine niedrigere Leistung des Gebläses als zum Entfernen eines Teils eines Etiketts notwendig sein. In der Speichereinheit können einer Vielzahl von Verschmutzungsarten entsprechende Verschmutzungsgrade zugeordnet sein.

Die Erkennungseinheit 101a kann ausgebildet sein, den Verschmutzungsgrad kontinuierlich oder intervallweise zu bestimmen.

Die kontinuierliche Bestimmung kann beispielsweise umfassen, dass eine Bestimmung des Verschmutzungsgrades stattfindet, wenn sich kein Behälter in der Inspektionsvorrichtung 100 befindet und wenn sich ein Behälter 104 in der Inspektionsvorrichtung 100 befindet. Kontinuierlich kann jedoch auch bedeuten, dass ein Verschmutzungsgrad immer dann bestimmt wird, wenn sich kein Behälter in der Inspektionsvorrichtung 100 befindet oder immer dann, wenn sich ein Behälter 104 in der Inspektionsvorrichtung 100 befindet.

Die intervallweise Bestimmung kann beispielsweise umfassen, dass der Verschmutzungsgrad in bestimmten Zeitintervallen bestimmt wird, also beispielsweise jede 10 Sekunden, jede Minute, jede 10 Minuten, jede Stunde oder nach jedem anderen Zeitintervall. Die intervallweise Bestimmung kann jedoch auch umfassen, dass die Bestimmung des Verschmutzungsgrades nach der Inspektion jedes n-ten Behälters stattfindet, wobei n eine ganze Zahl größer 1, wie beispielsweise 5, 10, 20, 100 oder jede andere ganze Zahl sein kann.

Wie weiter oben bereits beschrieben, ist es erfindungsgemäß vorgesehen, dass eine Leistung des Gebläses 103 basierend auf dem bestimmten Verschmutzungsgrad und/oder nach einem ersten Zeitintervall von einer ersten Leistungsstufe auf eine zweite Leistungsstufe verändert werden kann.

Die erste Leistungsstufe kann unabhängig vom dem Verschmutzungsgrad gewählt sein und zu einer kontinuierlichen Grundreinigung der Schutzvorrichtung 101b vorgesehen sein. Die erste Leistungsstufe kann beispielsweise derart gewählt sein, dass eine hinreichende Reinigung der Schutzvorrichtung 101b von zeitlich wiederkehrenden Verschmutzungen, wie sie beispielsweise jedes Mal beim Einführen eines Behälters 104 in die Inspektionsvorrichtung 100 auftreten, erreicht werden kann. Weist beispielsweise jeder in die Inspektionsvorrichtung 100 eingebrachte Behälter 104 eine bestimmte Restfeuchtigkeit auf, so wird für jeden in die Inspektionsvorrichtung eingebrachten Behälter 104, eine ähnliche Menge Flüssigkeit von dem Behälter 104 auf die Inspektionsvorrichtung 100 heruntertropfen. Die erste Leistungsstufe kann in diesem Fall derart gewählt sein, dass zumindest die durchschnittlich von jedem Behälter heruntertropfende Flüssigkeit von der Schutzvorrichtung 101b entfernt werden kann.

Es kann vorgesehen sein, dass die erste Leistungsstufe einen von Null verschiedenen Wert aufweist. Dies kann bedeuten, dass in der ersten Leistungsstufe ein von Null verschiedenes Gasvolumen pro Zeiteinheit durch das Gebläse 103 auf die Schutzvorrichtung 101b ausgebracht wird.

Die zweite Leistungsstufe kann beispielsweise vorgesehen sein, um die Schutzvorrichtung 101b von stärkeren Verschmutzungen, welche auch in nicht regelmäßigen Intervallen auftreten können, zu reinigen. Hierfür kann die zweite Leistungsstufe eine höhere Leistung als die erste Leistungsstufe aufweisen.

Dadurch, dass die Leistung basierend auf dem Verschmutzungsgrad verändert werden kann, ist es auf diese Weise möglich, die Leistung des Gebläses 103 nur dann auf die zweite Leistungsstufe zu verändern, wenn dies auch notwendig ist. Dementsprechend kann der Energieverbrauch der Inspektionsvorrichtung 100 reduziert werden.

Eine Leistung der zweiten Leistungsstufe kann beispielsweise auf einen spezifischen Wert voreingestellt sein.

Es kann aber auch vorgesehen sein, dass die zweite Leistungsstufe basierend auf dem Verschmutzungsgrad bestimmt wird und somit flexibel abhängig von dem bestimmten Verschmutzungsgrad einstellbar ist. Beispielsweise kann es in diesem Fall vorgesehen sein, dass in der oben genannten Speichereinheit der Computereinheit Referenzwerte für die zweite Leistungsstufe hinterlegt sind. Jedem Referenzwert kann wiederum ein spezifischer Verschmutzungsgrad zugeordnet sein. Somit kann die Erkennungseinheit 101a basierend auf den in der Speichereinheit hinterlegten Daten für einen spezifischen Verschmutzungsgrad eine passende zweite Leistungsstufe bestimmen. Auf diese Weise kann eine besonders effiziente Reinigung der Schutzvorrichtung 101b durch das Gebläse 103 erreicht werden.

Nachdem die Leistung des Gebläses 103 basierend auf dem bestimmten Verschmutzungsgrad auf die zweite Leistungsstufe verändert wurde, kann es vorgesehen sein, dass die Leistung des Gebläses 103 basierend auf dem Verschmutzungsgrad wieder auf die erste Leistungsstufe verändert werden kann. Konnte durch die Veränderung der Leistung auf die zweite Leistungsstufe beispielsweise der Verschmutzungsgrad der Schutzvorrichtung 103 auf einen bestimmten Wert reduziert werden, dann ist ein Betrieb des Gebläses 103 auf der zweiten Leistungsstufe nicht mehr notwendig, so dass die Leistung des Gebläses 103 wieder auf die erste Leistungsstufe reduziert werden kann und der Energiebedarf der Inspektionsvorrichtung 100 reduziert werden kann. Hierfür kann es beispielsweise vorgesehen sein, dass die Inspektionseinheit 101a den Verschmutzungsgrad auch nach Veränderung der Leistung auf die zweite Leistungsstufe weiter bestimmt (beispielsweise kontinuierlich oder intervallweise) und die Leistung des Gebläses 103 basierend auf dem Verschmutzungsgrad wieder auf die erste Leistungsstufe reduzieren werden kann. Die Reduzierung der Leistung kann beispielsweise auch schrittweise erfolgen.

Durch das alternativ vorgesehene Verändern der Leistungsstufe von der ersten Leistungsstufe auf die zweite Leistungsstufe nach einem ersten Zeitintervall können ebenfalls Verschmutzungen, welche nicht durch das auf der ersten Leistungsstufe betriebene Gebläse 103 entfernt werden können, auf energieeffiziente Weise entfernt und eine zuverlässige Funktion der Inspektionsvorrichtung 100 gewährleistet werden. Das erste Zeitintervall kann flexibel gewählt sein und beispielsweise einer Zeitdauer entsprechen, innerhalb welcher im Mittel Verunreinigungen der Schutzvorrichtung 101b auftreten, welche durch das mit der ersten Leistungsstufe betriebene Gebläse 103 nicht entfernt werden können.

Nachdem die Leistung des Gebläses 103 für die Dauer eines zweiten Zeitintervalls angehoben wurde, kann es vorgesehen sein, dass die Leistung des Gebläses 103 wieder auf die erste Leistungsstufe verändert wird. Beispielsweise kann das zweite Zeitintervall eine mittlere Zeitdauer sein, welche im Schnitt benötigt wird, um Verschmutzungen die nicht durch das mit der ersten Leistungsstufe betriebene Gebläse 103 entfernt werden können, nach Erhöhung auf die zweite Leistungsstufe von der Schutzvorrichtung 101b zu entfernen.

Die zweite Zeitdauer kann auch flexibel basierend auf der Höhe der zweiten Leistungsstufe gewählt sein. Entspricht die zweite Leistungsstufe beispielsweise 90% einer maximalen Leistung des Gebläses 103, kann es vorgesehen sein, dass das zweite Zeitintervall kürzer gewählt ist, als für eine zweite Leistungsstufe, welche beispielsweise nur 70% einer maximalen Leistung des Gebläses 103 entspricht. **In** der Speichereinheit der oben beschriebenen Computereinheit können beispielsweise für verschiedene zweite Leistungsstufen entsprechende Werte für das zweite Zeitintervall zugeordnet sein.

Es kann jedoch auch vorgesehen sein, dass das zweite Zeitintervall unabhängig von der Höhe der zweiten Leistungsstufe gewählt ist.

Ferner kann es vorgesehen sein, dass das Gebläse situativ gesteuert werden kann. Wird durch die Erkennungseinheit, wie beispielsweise durch die weiter oben beschriebene Bildauswertung der Erkennungseinheit erkannt, dass sich eine Umgebungsbedingung, welche Einfluss auf den Verschmutzungsgrad der Schutzvorrichtung haben kann, verändert, dann kann auch hierauf basierend die Leistung des Gebläses verändert werden. Beispielsweise kann hierauf basierend die erste Leistungsstufe des Gebläses erhöht werden. Bei der Veränderung der Umgebungsbedingung kann es sich beispielsweise um eine Veränderung der Wasserhärte oder eine Veränderung der Dosierung einer Bandschmieranlage für ein Transportband zum Transport von Behältern handeln.

Das Gebläse kann ferner variabel angesteuert werden.

Es kann zudem vorgesehen sein, dass die Inspektionsvorrichtung zusätzlich zum Gebläse eine Reinigungsvorrichtung umfasst, die ausgebildet ist basierend auf dem bestimmten Verschmutzungsgrad die Schutzvorrichtung zu reinigen. Beispielsweise kann die Reinigungsvorrichtung zur Reinigung der Schutzvorrichtung mit Wasser, einem Reinigungsmittel, Trockeneis oder einer Wischvorrichtung, wie einem Scheibenwischer ausgebildet sein. Eine Aktivierung der zusätzlichen Reinigungsvorrichtung kann beispielsweise im Falle von besonders hartnäckigen Verschmutzungen vorgesehen sein, welche beispielsweise durch das Gebläse nicht entfernt werden können.

Umfasst die Schutzvorrichtung eine runde Schutzscheibe, dann kann es auch vorgesehen sein, dass die Schutzvorrichtung eine Drehvorrichtung zum Drehen der Schutzscheibe umfasst und die Drehvorrichtung basierend auf dem bestimmten Verschmutzungsgrad gesteuert werden kann. Ist beispielsweise nur ein bestimmter Bereich der Schutzscheibe verschmutzt, welcher in einem Erkennungsbereich der Erkennungseinheit liegt, dann kann dieser Bereich beispielsweise durch Drehung der Schutzscheibe aus dem Erkennungsbereich der Erkennungseinheit herausgedreht werden.

Zusätzlich kann das Gebläse ausgebildet sein, vor einem Anlauf einer Behälterbehandlungsanlage, in welcher die Inspektionsvorrichtung angeordnet sein kann, bzw. vor einem Anlauf einer Transportvorrichtung mittels welcher die Behälter an der Inspektionsvorrichtung vorbeigeführt werden können, eine Leistung des Gebläses zu erhöhen. Auf diese Weise kann beispielsweise eine von einem auf der Inspektionsvorrichtung stehenden Behälters auf die Schutzvorrichtung herunterlaufende Flüssigkeit von der Schutzvorrichtung entfernt werden.

## Patentansprüche

1. Inspektionsvorrichtung für Behälter, umfassend eine Inspektionseinheit und ein Gebläse, wobei die Inspektionseinheit eine Erkennungseinheit und eine Schutzvorrichtung für zumindest einen Teil der Erkennungseinheit umfasst, wobei das Gebläse ausgebildet ist, die Schutzvorrichtung mit einem Reinigungsfluid zu beaufschlagen, wobei die Erkennungseinheit ausgebildet ist einen Verschmutzungsgrad der Schutzvorrichtung zu bestimmen, wobei eine Leistung des Gebläses basierend auf dem bestimmten Verschmutzungsgrad und/oder nach einem ersten Zeitintervall von einer ersten Leistungsstufe auf eine zweite Leistungsstufe verändert werden kann.

2. Inspektionsvorrichtung nach Anspruch 1, wobei die Erkennungseinheit eine Lichtquelle zum Durchleuten eines Behälters und eine Kameraeinheit umfasst, wobei die Schutzvorrichtung zumindest teilweise transparent ausgebildet und zum Schutz der Lichtquelle vorgesehen ist, wobei die Kameraeinheit ausgebildet ist, den Verschmutzungsgrad der Schutzvorrichtung zu bestimmen.

3. Inspektionsvorrichtung nach Anspruch 1 oder 2, wobei die Erkennungseinheit ausgebildet ist, den Verschmutzungsgrad der Schutzvorrichtung zu bestimmen, wenn kein Behälter durch die Inspektionseinheit inspiziert wird.

4. Inspektionsvorrichtung nach einem der Ansprüche 1 bis 3, wobei die Erkennungseinheit ausgebildet ist, den Verschmutzungsgrad der Schutzvorrichtung durch Vergleich von wenigstens zwei an unterschiedlichen Behältern durch die Inspektionseinheit erlangten Inspektionsergebnissen zu bestimmen.

5. Inspektionsvorrichtung nach einem der Ansprüche 1 bis 4, wobei die Erkennungseinheit ausgebildet ist, den Verschmutzungsgrad der Schutzeinrichtung kontinuierlich oder intervallweise zu bestimmen.

6. Inspektionsvorrichtung nach einem der Ansprüche 1 bis 5, wobei die Leistung des Gebläses basierend auf dem Verschmutzungsgrad von der zweiten Leistungsstufe auf die erste Leistungsstufe oder wobei die Leistung des Gebläses nach einem zweiten Zeitintervall von der zweiten Leistungsstufe auf die erste Leistungsstufe verändert werden kann.

7. Inspektionsvorrichtung nach einem der Ansprüche 1 bis 6, wobei die Erkennungseinheit ausgebildet ist, eine Leistung des Gebläses basierend auf einem Vergleich des Verschmutzungsgrads mit wenigstens einem Referenzwert zu verändern.

8. Inspektionsvorrichtung nach einem der Ansprüche 1 bis 7, wobei die erste Leistungsstufe unabhängig von dem Verschmutzungsgrad der Schutzvorrichtung gewählt sein kann, wobei die erste Leistungsstufe optional basierend auf einer Restfeuchtigkeit mit welcher die Behälter in die Inspektionsvorrichtung eingeführt werden können, gewählt sein kann.

9. Verfahren zur Inspektion von Behältern mit einer Inspektionsvorrichtung, wobei die Inspektionsvorrichtung eine Inspektionseinheit und ein Gebläse umfasst, wobei die Inspektionseinheit eine Erkennungseinheit und eine Schutzvorrichtung für zumindest einen Teil der Erkennungseinheit umfasst, wobei das Gebläse die Schutzvorrichtung mit einem Reinigungsfluid beaufschlagt, wobei die Erkennungseinheit einen Verschmutzungsgrad der Schutzvorrichtung bestimmt und eine Leistung des Gebläses basierend auf dem bestimmten Verschmutzungsgrad und/oder nach einem ersten Zeitintervall zumindest zeitweise von einer ersten Leistungsstufe auf eine zweite Leistungsstufe verändert wird.

10. Verfahren nach Anspruch 9, wobei die Erkennungseinheit eine Lichtquelle zum Durchleuten eines Behälters und eine Kameraeinheit umfasst, wobei die Schutzvorrichtung zumindest teilweise transparent ausgebildet und zum Schutz der Lichtquelle vorgesehen ist, wobei die Kameraeinheit den Verschmutzungsgrad der Schutzvorrichtung bestimmt.

11. Verfahren nach Anspruch 9 oder 10, wobei die Erkennungseinheit den Verschmutzungsgrad der Schutzvorrichtung bestimmt, wenn kein Behälter durch die Inspektionseinheit inspiziert wird.

12. Verfahren nach einem der Ansprüche 9 bis 11, wobei die Erkennungseinheit den Verschmutzungsgrad der Schutzvorrichtung durch Vergleich von wenigstens zwei an unterschiedlichen Behältern durch die Inspektionseinheit erlangten Inspektionsergebnissen bestimmt.

13. Verfahren nach einem der Ansprüche 9 bis 12, wobei die Erkennungseinheit den Verschmutzungsgrad der Schutzeinrichtung kontinuierlich oder intervallweise bestimmt.

14. Verfahren nach einem der Ansprüche 9 bis 13, wobei die Leistung des Gebläses basierend auf dem Verschmutzungsgrad von der zweiten Leistungsstufe auf die erste Leistungsstufe oder wobei die Leistung des Gebläses nach einem zweiten Zeitintervall von der zweiten Leistungsstufe auf die erste Leistungsstufe verändert wird.

15. Verfahren nach einem der Ansprüche 9 bis 14, wobei die Erkennungseinheit die Leistung des Gebläses basierend auf einem Vergleich des Verschmutzungsgrads mit wenigstens einem Referenzwert verändert.
